(19) Europäisches Patentamt
European Patent Office
Office européen des brevets

(11) **EP 2 440 886 B1**

(12) **EUROPÄISCHE PATENTSCHRIFT**

(45) Veröffentlichungstag und Bekanntmachung des Hinweises auf die Patenterteilung:
**08.03.2017 Patentblatt 2017/10**

(21) Anmeldenummer: **10730068.3**

(22) Anmeldetag: **11.06.2010**

(51) Int Cl.:
**G01F 1/58** (2006.01) **H01F 41/02** (2006.01)

(86) Internationale Anmeldenummer:
**PCT/EP2010/003503**

(87) Internationale Veröffentlichungsnummer:
**WO 2010/142451 (16.12.2010 Gazette 2010/50)**

(54) **MAGNETISCH-INDUKTIVER DURCHFLUSSMESSER**

ELECTROMAGNETIC FLOWMETER

DÉBITMÈTRE À INDUCTION MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **12.06.2009 US 457483**
**19.12.2009 DE 202009017274 U**
**19.12.2009 DE 202009017275 U**

(43) Veröffentlichungstag der Anmeldung:
**18.04.2012 Patentblatt 2012/16**

(73) Patentinhaber: **Sensus Spectrum LLC**
**Raleigh, NC 27615 (US)**

(72) Erfinder:
• **GÖGGE, Jörn**
**55234 Oberflörsheim (DE)**
• **ZIMMERMAN, Michael Addison**
**PA 15411 (US)**
• **PSTIR, Raymond Irwin**
**PA 15642 (US)**

(74) Vertreter: **Patentanwälte Dr. Keller, Schwertfeger**
**Westring 17**
**76829 Landau (DE)**

(56) Entgegenhaltungen:
EP-A1- 0 179 285   EP-A1- 0 309 932
EP-A1- 0 626 567   DE-B- 1 009 292
GB-A- 2 269 443   JP-A- 2005 207 971

**Beschreibung**

Technisches Gebiet:

Die Erfindung betrifft magnetisch-induktive Durchflussmesser gemäß dem Oberbegriff des Anspruchs 1 wie beispielsweise aus der EP 1 79 285 A1 bekannt.

Stand der Technik:

Magnetisch-induktive Durchflussmesser verwenden eine Messmethode, die auf dem Faraday'schen Gesetz der elektromagnetischen Induktion beruht. Die erste Grundlage zur magnetisch-induktiven Messung der Strömungsgeschwindigkeit von Fluiden wurde im Jahr 1832 in einer Veröffentlichung von Michael Faraday festgehalten. Die moderne elektronische Schaltungstechnik in Verbindung mit magnetischen Wechselfeldern machte es möglich, die Trennung der zur Strömungsgeschwindigkeit proportionalen Nutzsignale von Störsignalen, die auf elektro-chemische Vorgänge beim Erzeugen des Magnetfeldes an den zur Signalauskopplung benutzten Elektroden auftreten, zu bewältigen. Somit schien dem weit verbreiteten industriellen Einsatz magnetisch-induktiver Durchflussmesser nichts mehr im Wege zu stehen.

Das Messprinzip der magnetisch-induktiven Durchflussmesser nutzt die Trennung bewegter Ladungen in einem Magnetfeld aus. Durch ein Rohr aus nichtmagnetischem Werkstoff, dessen Innenseite elektrisch isolierend ist, strömt die zu messende leitfähige Flüssigkeit. Von außen wird mittels Spulen ein Magnetfeld aufgebracht. Die in der leitfähigen Flüssigkeit vorhandenen Ladungsträger, Ionen und andere geladene Teilchen, werden durch das Magnetfeld abgelenkt: die positiven Ladungsträger zur einen Seite, die negativen Ladungsträger zur anderen Seite. An senkrecht zum Magnetfeld angeordneten Messelektroden entsteht durch die Ladungstrennung eine Spannung, die mit einem Messgerät erfasst wird. Die Höhe der gemessenen Spannung ist proportional der Strömungsgeschwindigkeit der Ladungsträger und damit proportional zur Fließgeschwindigkeit des Messfluids. Mittels Integration über die Zeit lässt sich die Durchflussmenge ermitteln.

Bei Magnetfeldern, die mit reiner Wechselspannung erzeugt werden, kommt es zur Induktion von Störspannungen in den Elektroden, die durch geeignete jedoch aufwändige Filter unterdrückt werden müssen. Daher wird das Magnetfeld üblicherweise durch einen getakteten Gleichstrom wechselnder Polarität erzeugt. Dies gewährleistet einen stabilen Nullpunkt und macht die Messung unempfindlich gegenüber Einflüssen durch Mehrphasenstoffe und Inhomogenitäten in der Flüssigkeit. Auch bei geringer Leitfähigkeit ist so ein brauchbares Messsignal erreichbar.

Wird eine Messflüssigkeit durch das Messrohr bewegt, liegt gemäß dem Induktionsgesetz an den beiden Messelektroden, die in dem Messrohr senkrecht zur Fließrichtung und senkrecht zum Magnetfeld angeordnet sind, eine Spannung an. Diese Spannung ist bei einem symmetrischen Strömungsprofil und einem homogenen Magnetfeld direkt proportional zur mittleren Strömungsgeschwindigkeit. Das induktive Durchflussmessverfahren ist in der Lage, direkt aus dem Durchfluss ein elektrisch nutzbares Signal zur Weiterverarbeitung zu erzeugen. Es gilt grundsätzlich die Gleichung:

$$U = k * B * D * v$$

mit U = Spannung, k = Proportionalitätsfaktor, B = Magnetfeldstärke, D = Rohrdurchmesser, v = Strömungsgeschwindigkeit.

Eine mögliche Realisierung eines magnetisch-induktiven Durchflussmessers ist in der US 6,626,048 B1 offenbart. Allerdings zeigt diese Schrift nur die physikalischen und elektronischen Grundlagen, keine praktische Realisierung.

Es versteht sich, dass bei der praktischen Realisierung eines magnetisch-induktiven Durchflussmessers erhebliche Probleme zu lösen sind.

Da ist zum einen die Frage des Materials. Das Messrohr muss amagnetisch sein, um die Magnetfelder nicht zu stören. Das Messrohr muss des Weiteren elektrisch isolierend sein, um die Abnahme der Spannung mit Hilfe der Elektroden nicht zu stören. Darüber hinaus muss das Rohr aus lebensmittelechtem Material bestehen, wenn das Fluid ein Lebensmittel ist, beispielsweise Trinkwasser.

Diese Anforderungen lassen sich am besten erfüllen, wenn als Material ein lebensmittelechter Kunststoff verwendet wird. Allerdings haben Kunststoffe gegenüber Metall den Nachteil der wesentlich geringeren Festigkeit. Festigkeit gegenüber dem Innendruck ist jedoch zwingende Voraussetzung. Der Versuch, die Innendruckfestigkeit durch eine vergrößerte Dicke der Rohrwand zu erreichen, ist nicht gangbar, da anderenfalls das Magnetfeld zu sehr geschwächt würde.

Wie oben erwähnt, ist die Spannung an den Messelektroden proportional dem Magnetfeldstärke, vorausgesetzt das Magnetfeld durchsetzt den Messkanal homogen. Die US 6,626,048 B1 offenbart für einen kreiszylindrischen Messkanal eine Lösung, bestehend aus einer Magnetspule mit einem Magnetkern aus ferromagnetischem Elektroblech sowie zwei mit dem Magnetkern gekoppelten Magnetpolen aus weichmagnetischem Elektroblech. Praktische Versuche haben jedoch gezeigt, dass mit dieser Anordnung keine befriedigenden Messergebnisse zu erzielen sind. Gründe sind die relativ langen Feldlinien und der große magnetische Widerstand im Elektroblech, da der Magnetkreis um die Elektroden herum angeordnet ist.

Darstellung der Erfindung:

Der vorliegenden Erfindung liegt die Aufgabe zugrunde, einen magnetisch-induktiven Durchflussmesser anzugeben, der die vorstehend genannten Probleme meistert und ein optimiertes Messergebnis liefert.

Diese Aufgabe wird gelöst durch magnetisch-induktive Durchflussmesser mit den Merkmalen des Patentanspruchs 1.

Wesentlicher Vorteil der erfindungsgemäßen Magnetpole ist die gleichmäßige Verteilung der Magnetfeldlinien über die gesamte Polfläche, bewirkt durch den Doppelsteg auf der Rückseite der Magnetpole. Durch geschickte Dimensionierung der Doppelstege lässt sich die Verteilung der magnetischen Feldlinien beeinflussen. Gleichzeitig lässt sich das Stanz-Falt-Biege-Teil vollautomatisch und in großen Stückzahlen herstellen.

Gemäß einer Ausgestaltung der Erfindung sind die Magnetpolflächen dreieckig, der daraus gebildete Magnetpol rechteckig. Eine Alternative sind ellipsenförmige Magnetpole.

Der Doppelsteg hat weitere Vorteile zur Folge. Wird gemäß einer Ausgestaltung der

Erfindung der Magnetkern des Elektromagneten oder jedenfalls an dessen Enden flach ausgebildet, so lässt er sich zwischen den Doppelstegen einklemmen. Auf diese Weise werden die im Elektromagneten erzeugten Magnetfeldlinien optimal und ohne schwächenden Luftspalt auf beide Teile des Doppelstegs verteilt, der sie dann in die Flächenelemente des Magnetpols weiterleitet.

Um die Montage des Magnetkerns des Elektromagneten zu erleichtern, können die Enden des Doppelstegs trichterartig gespreizt sein.

Um die Handhabung und Positionierung von Elektromagnet, Magnetkern und Magnetpolen zu ermöglichen, ist gemäß einer Weiterbildung der Erfindung ein Kunststoffhalter vorgesehen, der diese Teile klemmend festhält.

Gemäß einer bevorzugten Ausgestaltung hierzu besitzt der Kunststoffhalter etwa U-Form mit einem stabilen Quersteg am Kopfende, zwei kurzen Schenkeln, zwei dazu parallelen langen Schenkeln, einer Nut zwischen langen und kurzen Schenkeln, abgestimmt auf die Stärke von Doppelsteg und Magnetkern, und Seitenführungen, die die lagerechte Position des Doppelstegs der Magnetpole auf dem langen Schenkel gewährleisten.

Dieser Kunststoffhalter hat den Vorteil, dass die Magnetteile durch einfache Steckvorgänge montiert werden können. Die Kombination aus Kunststoffhalter und Magnetteilen kann dann einfach und sicher gehandhabt und schließlich im magnetischinduktiven Durchflussmesser montiert werden.

Gemäß einer Weiterbildung können die langen Schenkel in einem Haken enden. Diese Konstruktion ist von Vorteil, wenn das Gehäuse des magnetisch-induktiven Durchflussmessers dazu passend geformt ist.

Kurze Beschreibung der Zeichnungen:

Anhand der Zeichnung soll die Erfindung in Form von Ausführungsbeispielen näher erläutert werden. Es zeigen

Fig. 1     ein Stanz-Biege-Falt-Teil aus Elektroblech zur Herstellung eines rechteckigen Magnetpols,

Fig. 2     einen daraus hergestellten Magnetpol,

Fig. 3     als Frontansicht einen Elektromagneten mit flachem Magnetkern und zwei Magnetpolen gemäß Fig. 1, klemmend befestigt in einem Kunststoffhalter,

Fig. 4     eine Seitenansicht zu Fig. 3 und

Fig. 5     den mit den Magnetteilen bestückten Kunststoffhalter der Fig. 3, eingesetzt in ein quer geschnittenes Gehäuse eines magnetisch-induktiven Durchflussmessers.

Wege zur Ausführung der Erfindung und gewerbliche Verwertbarkeit:

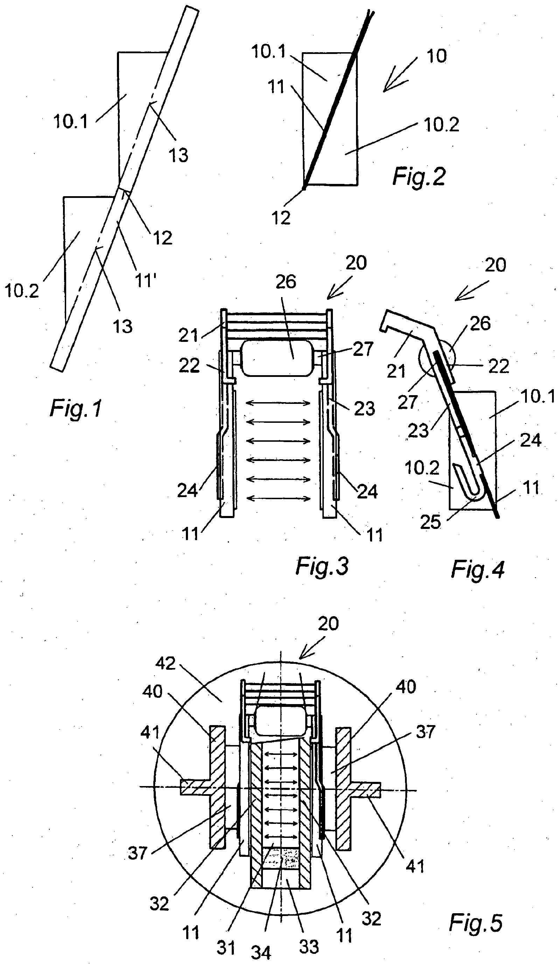

Fig. 1 zeigt ein Stanz-Falt-Biege-Teil aus Elektroblech. Man erkennt eine lang gestreckte Leiste 11', an der mit gegenseitigem Abstand dreieckige Flächenelemente 10.1, 10.2 angeformt sind. Zwischen den Flächenelementen 10.1, 10.2 ist auf der Leiste 11' eine Faltlinie 12 vorgesehen. Zwischen der Leiste 11' und den Flächenelementen 10.1, 10.2 sind Biegelinien 13 vorgesehen.

Fig. 2 zeigt den aus dem Element der Fig. 1 durch Falten entlang der Linie 12 und durch Biegen entlang der Linien 13 entstandenen Magnetpol 10. Die beiden dreieckigen Flächenelemente 10.1, 10.2 ergänzen sich zu einem rechteckigen Magnetpol. Die freien Enden des Doppelstegs 11 sind trichterartig gespreizt. Andere Formen der Magnetpolflächen, z. B. abgerundet, eiförmig usw., sind ohne weiteres möglich.

Wesentlicher Vorteil dieses Magnetpols 10 ist neben der einfachen Herstellung die optimale Leitung der Magnetfelder durch den Doppelsteg 11 zu den Polflächen. Des Weiteren lassen sich flache Enden eines Magnetkerns 27 eines Elektromagneten 26 (Fig. 3 und 4) zwischen dem Doppelsteg 11 einklemmen, so dass die vom Elektromagneten 26 erzeugten Magnetfelder optimal und ohne störenden Luftspalt zu den Polflächen gelangen.

Fig. 3 zeigt den Elektromagneten 26 mit einem flachem Magnetkern 27, dessen Enden zwischen den Doppelstegen 11 zweier Magnetpole 10 eingeklemmt sind. Die Magnetteile 10, 27 sind ihrerseits in einem Kunststoffhalter 20 klemmend befestigt. Der Kunststoffhalter 20 hat etwa U-Form mit einem stabilen Quersteg 21 am Kopfende, zwei kurzen Schenkeln 22, zwei dazu parallelen langen Schenkeln 23, einer Nut zwischen den beiden Schenkeln 22, 23, abgestimmt auf Doppelsteg 11 und den Magnetkern 27, und Seitenführungen 24, die die lagerechte Position des Doppelstegs 11 auf dem langen Schenkel 23 gewährleisten.

Das in der Magnetspule 26 erzeugte magnetische Wechselfeld wird über den Magnetkern 27 großflächig auf die Doppelstege 11 und von diesen auf die Magnetpole 10 übertragen, von denen das durch Doppelpfeile symbolisierte homogene Magnetfeld erzeugt wird.

Fig. 4 zeigt die Vorrichtung der Fig. 3 als Seitenansicht. Man erkennt den zwischen dem Doppelsteg 11 eingeklemmten Magnetkern 27 und den zwischen den Schenkeln 22, 23 eingeklemmten Doppelsteg 11. Ferner erkennt man am unteren Ende des langen Schenkels 23 einen angeformten Haken 25, der mit einem entsprechenden Gegenstück am Gehäuse eines magnetisch induktiven Durchflussmessers korrespondiert.

Fig. 5 zeigt den Kunststoffhalter 20 der Figuren 3 und 4 mit den montierten Magnetteilen. 10, 26, 27, eingesetzt in ein Gehäuse eines magnetisch-induktiven Durchflussmessers, das als Querschnitt dargestellt ist. Der magnetisch-induktive Durchflussmesser besitzt einen rechteckigen Messkanal 31 mit langen Seitenwänden 32, an deren Außenseite die Magnetpole 10 anliegen, um im Inneren des Messkanals 31 das durch Doppelpfeile symbolisierte homogene Magnetfeld zu erzeugen. Man erkennt ferner eine der in dem Messkanal 31 eingesetzten Elektroden 34, die senkrecht zum Magnetfeld orientiert sind und an denen eine Messspannung abgenommen werden kann, die dem zu messenden Durchfluss proportional ist.

Fig. 5 zeigt im Querschnitt ferner einen äußeren Verstärkungskäfig für das Gehäuse, bestehend aus zwei parallelen, hier senkrecht orientierten ersten Längsrippen 40 und zwei dazu senkrecht stehenden zweiten Längsrippen 41. Beide Längsrippen 40, 41 enden in einem Querschott 42, an dessen Rückseite ein (hier nicht sichtbarer) Einlass- oder Auslassstutzen für das Messfluid existiert. Die Magnetspule 26 ist neben einer der beiden Elektroden 34 positioniert, und zwar möglichst nahe. Dadurch wird der magnetische Weg von der Magnetspule 26 über den Magnetkern 27 und den Doppelsteg 11 zu den Magnetpolflächen sehr kurz und die Elektrode 34 bleibt frei zugänglich, um die Messspannung abzugreifen.

Schließlich erkennt man noch zwischen den Wänden 32 des Messkanals 31 und den ersten Längsrippen 40 ein inneres Querschott 37, welches den vom Innendruck im Messkanal 31 auf die Kanalwände 32 ausgeübten Druck auf den äußeren Käfig 40, 41 überträgt.

**Patentansprüche**

1.  Magnetisch-induktiver Durchflussmesser mit einem druckfesten Gehäuse aus Kunststoff, umfassend eine Messeinheit mit

- einem vom Messfluid durchströmten Messkanal (31) mit rechteckigem Querschnitt,
- einer Kanalwand (32),
- zwei sich gegenüber liegenden Magnetpolen (10) an der Kanalwand (32),
- einem Elektromagneten mit Magnetspule (26) und Magnetkern (27) zum Erzeugen eines magnetischen Wechselfeldes,
- und zwei sich gegenüber liegenden Messelektroden (34) in der Kanalwand (32), **gekennzeichnet durch** die Merkmale:
- die Magnetpole (10) sind Stanz-Biege-Falt-Teile aus Elektroblech in Form einer langgestreckten Leiste (11') mit angeformten, gegenseitig beabstandeten Flächenelementen (10.1, 10.2),
- die langgestreckte Leiste (11') bildet nach dem Falten einen Doppelsteg (11),
- die Flächenelemente (10.1, 10.2) bilden nach dem Biegen Magnetpolflächen,
- der Doppelsteg (11) und die Magnetpolflächen bilden den Magnetpol (10),
- der Doppelsteg (11) befindet sich auf der Rückseite des Magnetpols (10).

2.  Magnetisch-induktiver Durchflussmesser nach Anspruch 1, **gekennzeichnet durch** die Merkmale:

- die Magnetspule (26) ist neben einer der Messelektroden (34) positioniert,
- der Doppelsteg verläuft diagonal zu den Magnetpolflächen.

3.  Magnetisch-induktiver Durchflussmesser nach Anspruch 1 oder 2, **gekennzeichnet durch** die Merkmale:

- die Flächenelemente (10.1, 10.2) sind dreieckig,
- die Magnetpolflächen bilden ein Rechteck,
- der Doppelsteg (11) steht senkrecht auf den Magnetpolflächen.

4.  Magnetisch-induktiver Durchflussmesser nach Anspruch 1. oder 2, **gekennzeichnet durch** die Merkmale:

- die Flächenelemente sind abgerundet,
- die Magnetpolflächen bilden eine Ellipse,
- der Doppelsteg (11) steht senkrecht auf den Magnetpolflächen.

5.  Magnetisch-induktiver Durchflussmesser nach einem der Ansprüche 1 bis 4, **gekennzeichnet durch** das Merkmal:

- der Magnetkern (27) des Elektromagneten (26) ist

-- flach
-- und zwischen den Doppelstegen (11) eingeklemmt.

**6.** Magnetisch-induktiver Durchflussmesser nach einem der Ansprüche 1 bis 5, **gekennzeichnet durch** das Merkmal:

- die Enden des Doppelstegs (11) sind trichterartig gespreizt.

**7.** Magnetisch-induktiver Durchflussmesser nach einem der Ansprüche 1 bis 6, **gekennzeichnet durch** das Merkmal:

- ein Kunststoffhalter (20) hält Magnetspule (26), Magnetkern (27) und Magnetpole (10) klemmend fest.

**8.** Magnetisch-induktiver Durchflussmesser nach Anspruch 7, **gekennzeichnet durch** das Merkmal:

- der Kunststoffhalter (20) besitzt etwa U-Form mit

-- einem stabilen Quersteg (21) am Kopfende,
-- zwei kurzen Schenkeln (22),
-- parallel dazu zwei langen Schenkeln (23)
-- und einer Nut zwischen den beiden Schenkeln (22, 23), abgestimmt auf eine klemmende Befestigung von Doppelsteg (11) und Magnetkern (27).

**9.** Magnetisch-induktiver Durchflussmesser nach Anspruch 7 oder 8, **gekennzeichnet durch** das Merkmal:

-- Seitenführungen (24) gewährleisten die lagerechte Position des Doppelstegs (11) auf dem langen Schenkel (23).

**10.** Magnetisch-induktiver Durchflussmesser nach Anspruch 7, 8 oder 9, **gekennzeichnet durch** das Merkmal:

- die langen Schenkel (23) enden in einem Haken (25).

**Claims**

**1.** Magnetic-inductive flowmeter comprising a pressure-resistant housing made of plastics material and a measuring unit having:

- a measuring channel (31) which has a rectangular cross section and through which measuring fluid flows,
- a channel wall (32),
- two opposing magnetic poles (10) on the channel wall (32),
- an electromagnet having a magnetic coil (26) and a magnetic core (27) for generating an alternating magnetic field,
- and two opposing measuring electrodes (34) in the channel wall (32),

**characterised by** the following features:

- the magnetic poles (10) are punched, bent and folded parts made of electrical sheet in the form of an elongate strip (11') having integrally moulded surface elements (10.1, 10.2) which are spaced apart from one another,
- the elongate strip (11') forms a double web (11) after the folding,
- the surface elements (10.1, 10.2) form magnetic pole surfaces after the bending,
- the double web (11) and the magnetic pole surfaces form the magnetic pole (10),
- the double web (11) is located on the rear side of the magnetic pole (10).

**2.** Magnetic-inductive flowmeter according to claim 1, **characterised by** the following features:

- the magnetic coil (26) is positioned beside one of the measuring electrodes (34),
- the double web extends diagonally relative to the magnetic pole surfaces.

**3.** Magnetic-inductive flowmeter according to either claim 1 or claim 2, **characterised by** the following features:

- the surface elements (10.1, 10.2) are triangular,
- the magnetic pole surfaces form a rectangle,
- the double web (11) is perpendicular to the magnetic pole surfaces.

**4.** Magnetic-inductive flowmeter according to either claim 1 or claim 2, **characterised by** the following features:

- the surface elements are rounded,
- the magnetic pole surfaces form an ellipse,
- the double web (11) is perpendicular to the magnetic pole surfaces.

**5.** Magnetic-inductive flowmeter according to any of claims 1 to 4, **characterised by** the following feature:

- the magnetic core (27) of the electromagnet (26) is

- flat
- and clamped between the double webs (11).

6. Magnetic-inductive flowmeter according to any of claims 1 to 5, **characterised by** the following feature:

    - the ends of the double web (11) are splayed in a funnel-like manner.

7. Magnetic-inductive flowmeter according to any of claims 1 to 6, **characterised by** the following feature:

    - a plastics holder (20) secures the magnetic coil (26), the magnetic core (27) and the magnetic poles (10) in a clamped manner.

8. Magnetic-inductive flowmeter according to claim 7, **characterised by** the following feature:

    - the plastics holder (20) has a U-shape comprising

        - a stable transverse web (21) at the top end,
        - two short legs (22),
        - two long legs (23) which are parallel thereto,
        - and a groove between the two legs (22, 23) aligned so as to provide clamped fastening of the double web (11) and the magnetic core (27).

9. Magnetic-inductive flowmeter according to either claim 7 or claim 8, **characterised by** the following feature:

    - lateral guides (24) ensure the correct positioning of the double web (11) on the long leg (23).

10. Magnetic-inductive flowmeter according to claim 7, 8 or 9, **characterised by** the following feature:

    - the long legs (23) end in a hook (25).

**Revendications**

1. Débitmètre à induction magnétique pourvu d'un boîtier en matière plastique à l'épreuve de la pression, comprenant une unité de mesure présentant

    - un canal de mesure (31) de section transversale rectangulaire parcouru par le fluide à mesurer,
    - une paroi de canal (32),
    - deux pôles magnétiques (10) opposés sur la paroi de canal (32),
    - un électroaimant formé d'une bobine d'électroaimant (26) et d'un noyau d'électroaimant (27) pour générer un champ magnétique alternatif
    - et deux électrodes de mesure (34) opposées dans la paroi de canal (32),

**caractérisé en ce que** :

    - les pôles magnétiques (10) sont des pièces découpées, cintrées et pliées à partir d'une tôle magnétique sous la forme d'une baguette allongée (11') avec des éléments plans (10.1, 10.2) formés dessus et espacés l'un de l'autre,
    - la baguette allongée (11') forme après pliage une barrette double (11),
    - les éléments plans (10.1, 10.2) forment après cintrage des surfaces polaires magnétiques,
    - la barrette double (11) et les surfaces polaires magnétiques forment le pôle magnétique (10),
    - la barrette double (11) se trouve sur la face arrière du pôle magnétique (10).

2. Débitmètre à induction magnétique selon la revendication 1, **caractérisé en ce que**

    - la bobine d'électroaimant (26) est positionnée à côté d'une des électrodes de mesure (34),
    - la barrette double s'étend en diagonale par rapport aux surfaces polaires magnétiques.

3. Débitmètre à induction magnétique selon la revendication 1 ou la revendication 2, **caractérisé en ce que**

    - les éléments plans (10.1, 10.2) sont triangulaires,
    - les surfaces polaires magnétiques forment un rectangle,
    - la barrette double (11) est perpendiculaire aux surfaces polaires magnétiques.

4. Débitmètre à induction magnétique selon la revendication 1 ou la revendication 2, **caractérisé en ce que**

    - les éléments plans sont arrondis,
    - les surfaces polaires magnétiques forment une ellipse,
    - la barrette double (11) est perpendiculaire aux surfaces polaires magnétiques.

5. Débitmètre à induction magnétique selon l'une des revendications 1 à 4, **caractérisé en ce que**

    - le noyau d'électroaimant (27) de l'électroaimant (26) est

        -- plat

-- et serré entre les barrettes doubles (11).

6. Débitmètre à induction magnétique selon l'une des revendications 1 à 5, **caractérisé en ce que**

   - les extrémités de la barrette double (11) sont évasées en forme d'entonnoir.

7. Débitmètre à induction magnétique selon l'une des revendications 1 à 6, **caractérisé en ce que**

   - un support en matière plastique (20) maintient par serrage la bobine d'électroaimant (26), le noyau d'électroaimant (27) et les pôles magnétiques (10).

8. Débitmètre à induction magnétique selon la revendication 7, **caractérisé en ce que**

   - le support en matière plastique (20) possède une forme à peu près en U avec

     -- une barrette transversale stable (21) à l'extrémité côté tête,
     -- deux branches courtes (22),
     -- parallèlement à celles-ci deux branches longues (23)
     -- et une rainure entre les deux branches (22, 23), conçue pour une fixation par serrage de la barrette double (11) et du noyau d'électroaimant (27).

9. Débitmètre à induction magnétique selon la revendication 7 ou la revendication 8, **caractérisé en ce que**

   - des guidages latéraux (24) garantissent la position correcte de la barrette double (11) sur la branche longue (23).

10. Débitmètre à induction magnétique selon l'une des revendications 7, 8 ou 9, **caractérisé en ce que**

    - les branches longues (23) se terminent par un crochet (25).

*Fig.1*

*Fig.2*

*Fig.3*

*Fig.4*

*Fig.5*

**EP 2 440 886 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 179285 A1

- US 6626048 B1